(19) Europäisches Patentamt

European Patent Office

Office européen des brevets

(11) **EP 1 712 579 A1**

(12) **EUROPEAN PATENT APPLICATION**
published in accordance with Art. 158(3) EPC

(43) Date of publication:
**18.10.2006 Bulletin 2006/42**

(51) Int Cl.:
*C08G 61/12* (2006.01)   *H01B 1/12* (2006.01)
*H01M 4/86* (2006.01)   *H01M 10/40* (2006.01)
*H01M 14/00* (2006.01)

(21) Application number: **05709766.9**

(22) Date of filing: **04.02.2005**

(86) International application number:
**PCT/JP2005/001701**

(87) International publication number:
**WO 2005/075536 (18.08.2005 Gazette 2005/33)**

(84) Designated Contracting States:
**DE FR GB**

(30) Priority: **05.02.2004 JP 2004029342**

(71) Applicant: **Eamex Corporation**
**Suita-shi,**
**Osaka 564-0062 (JP)**

(72) Inventors:
• **HARA, Susumu,**
**c/o EAMEX CORPORATION**
**Suita-shi,**
**Osaka 564-0062 (JP)**

• **ZAMA, Tetsuji,**
**c/o EAMEX CORPORATION**
**Suita-shi,**
**Osaka 564-0062 (JP)**

(74) Representative: **Luderschmidt, Schüler & Partner**
**Patentanwälte,**
**John-F.-Kennedy-Strasse 4**
**65189 Wiesbaden (DE)**

(54) **FILMY OBJECT OF CONDUCTIVE POLYMER**

(57) A filmy object containing an electrically conductive polymer, **characterized in that** (1) the electrically conductive polymer is one obtained by the electrolytic polymerization method and (2) upon immersion in a good solvent, the filmy object expands to come to have a film surface area larger by 30% or more than the film surface area before the immersion.

FIG.1

10 μm     10 μm

**Description**

TECHNICAL FIELD

The present invention relates to a filmy object of electrically conductive polymer (an electrically conductive polymer) obtained by the electrolytic polymerization method.

BACKGROUND ART

As a method of producing an electrically conductive polymer such as polypyrrole, there are the electrolytic polymerization method and the oxidation polymerization method. Electrically conductive polymers obtained by different production methods are different in the structure of the obtained electrically conductive polymer film or in the physical properties even if the monomer components are the same. In particular, because of being a dense film, the electrically conductive polymer film obtained by the electrolytic polymerization method is more excellent in the physical strength than the film obtained by the oxidation polymerization method. For this reason, the electrically conductive polymer obtained by the electrolytic polymerization method is more excellent in durability than the electrically conductive polymer obtained by the oxidation polymerization method, and is especially useful in the case of using it in a film form.
Also, the electrically conductive polymer film not only has an electrically conductive property but also can incorporate ions as a dopant. Regarding the ions incorporated in the electrically conductive polymer, doping and dedoping can be repeatedly carried out by application of a voltage to the electrically conductive polymer. Since this doping and dedoping can be electrically controlled, application of electrically conductive polymers to various functional films using functional molecules as a dopant is now carried out.

DISCLOSURE OF THE INVENTION

Problems to be Solved by the Invention

However, because of having a dense structure, an electrically conductive polymer film obtained by the electrolytic polymerization method not only is insoluble to solvents but also generates little swelling. For this reason, regarding the electrically conductive polymer film obtained by the electrolytic polymerization method, no electrically conductive polymer film swelling largely by a solvent and being a gel polymer has not yet been obtained.
An object of the present invention is to provide a filmy object of an electrically conductive polymer obtained by the electrolytic polymerization method, capable of swelling largely to a solvent also, and functioning as a gel polymer.

Means for Solving the Problems

The inventors of the present invention have found out that even a filmy object of an electrically conductive polymer obtained by the electrolytic polymerization method can function as a gel polymer by using a filmy object containing an electrically conductive polymer characterized in that (1) the electrically conductive polymer is one obtained by the electrolytic polymerization method and (2) upon immersion in a good solvent, the filmy object quickly expands to come to have a film surface area larger by 30% or more than the film surface area before the immersion, thereby arriving at the present invention. The aforesaid filmy object can be used as a functional film that is doped and dedoped with large ions.

BRIEF DESCRIPTION OF THE DRAWINGS

Fig. 1 is a view of an electron microscope photograph on a filmy object of the present invention in the Example 1.
Fig. 2 is a view of an electron microscope photograph of the surface of the film surface on the electrolyte solution side on a filmy object of the present invention in the Comparative Example 1.

BEST MODES FOR CARRYING OUT THE INVENTION

The present invention is a filmy object containing an electrically conductive polymer, characterized in that

(1) the electrically conductive polymer is one obtained by the electrolytic polymerization method and
(2) upon immersion in a good solvent, the filmy object expands to come to have a film surface area larger by 30% or more than the film surface area before the immersion. Because of containing an electrically conductive polymer

obtained by the electrolytic polymerization method, the aforesaid filmy object is excellent in physical properties, and can swell largely by a solvent, so that the filmy object can function as a gel polymer. Also, since the filmy object can incorporate and release large functional molecules that are in an ion form, the filmy object can be used as a functional film.

The filmy object of the present invention contains an electrically conductive polymer obtained by the electrolytic polymerization method and, moreover, when the filmy object is immersed in a good solvent, the filmy object expands to come to have a film surface area larger by 30% or more than the film surface area before the immersion. In other words, the filmy object of the present invention can easily incorporate and release ions of functional molecules as a dopant because the filmy object has a property of swelling upon immersion in a good solvent and expanding to come to have a film surface area larger by 30% or more than the film surface area before the immersion. For this reason, the filmy object of the present invention can be used as a functional film even though it is a filmy object containing an electrically conductive polymer obtained by the electrolytic polymerization method and having large ions as a dopant. In order that the aforesaid filmy object can incorporate and release more numerous functional molecules and/or easily incorporate and release functional molecules, the increase in the surface area of the film surface of the filmy object is preferably 60% or more, more preferably 80% or more, still more preferably 100% or more, as compared with that before the immersion. Here, the aforesaid swelling is such that the filmy object retains a shape analogous to the shape before swelling, or a shape similar to the shape before swelling, so that it does not include coming to have a state of not being able to maintain the shape. Also, the aforesaid swelling is a finite swelling, so that it does not include an infinite swelling by which the filmy object comes to be dissolved.

The aforesaid good solvent means a solvent that swells the filmy object, and is not particularly limited. However, the aforesaid good solvent is preferably a polar organic solvent such as represented by propylene carbonate, acetone, ethanol, 1,2-diethoxyethane, 1-methyl-2-pyrrolidone, and dimethyl sulfoxide, and is more preferably propylene carbonate and acetone. Propylene carbonate is excellent in the solubility of ions, and is excellent as a solvent in carrying out the doping and dedoping. Also, acetone is a representative polar organic solvent, and is suitably used in peeling off the electrically conductive polymer obtained by the electrolytic polymerization method from the working electrode. Namely, an electrically conductive polymer having acetone as a good solvent is easily peeled off from the working electrode, and is excellent in the production workability.

The aforesaid good solvent is used for showing the film property of the filmy object of the present invention, and need not coincide with solvents that are present in the environment in which the filmy object is used as a functional film. However, in order that the filmy object of the present invention can incorporate and release larger functional molecules and/or easily incorporate and release functional molecules, the doping and dedoping of the ions of the functional molecules is preferably carried out in the aforesaid good solvent so as to allow the filmy object to function as a functional film.

The filmy object of the present invention contains an electrically conductive polymer obtained by the electrolytic polymerization method. As the aforesaid electrolytic polymerization method, a known electrolytic polymerization method can be used, where a working electrode and an opposing electrode thereof are disposed in an electrolyte solution containing an electrically conductive polymer monomer. For the aforesaid electrolytic polymerization method, regarding the physical polymerization condition, any of the constant-potential method, the constant-current method, and the electric sweeping method can be used. For example, the aforesaid electrolytic polymerization method can be carried out at an electric current density of 0.01 to 20 mA/cm$^2$ and a reaction temperature of -70 to 80°C. In order to obtain an electrically conductive polymer having a good film quality, the electrolytic polymerization method is preferably carried out under a condition with an electric current density of 0.1 to 2 mA/cm$^2$ and a reaction temperature of -40 to 40°C, more preferably under a condition with a reaction temperature of -30 to 30°C.

In the above-described electrolytic polymerization method, the solvent to be used as an electrolyte solution is not particularly limited as long as the solvent can dissolve a predetermined amount or more of the electrolyte contained in the electrolyte solution. As the aforesaid solvent, it is preferable to use an organic compound and or a halogenated hydrocarbon containing at least one or more bonds or functional groups among an ether bond, an ester bond, a carbonate bond, a hydroxyl group, a nitro group, a sulfone group, and a nitrile group, in order to obtain a film having a good quality. Two or more kinds of these solvents may be used in combination. Also, when being dry, the film is a porous film having a sponge form, so that the specific surface area is large, thereby facilitating the adsorption and release of specific molecules and substances.

Examples of the aforesaid organic compounds include 1,2-dimethoxyethane, 1,2-diethoxyethane, tetrahydrofuran, 2-methyltetrahydrofuran, 1,4-dioxane (the above being organic compounds containing an ether bond), γ-butyrolactone, ethyl acetate, n-butyl acetate, t-butyl acetate, 1,2-diacetoxyethane, 3-methyl-2-oxazolidinone, methyl benzoate, ethyl benzoate, butyl benzoate, diethyl phthalate (the above being organic compounds containing an ester bond), propylene carbonate, ethylene carbonate, dimethyl carbonate, diethyl carbonate, methyl ethyl carbonate, (the above being organic compounds containing a carbonate bond), ethylene glycol, 1-butanol, 1-hexanol, cyclohexanol, 1-octanol, 1-decanol, 1-dodecanol, 1-octadecanol (the above being organic compounds containing a hydroxyl group), nitromethane, nitrobenzene (the above being organic compounds containing a nitro group), sulfolane, dimethylsulfone (the above being organic compounds containing a sulfone group), and acetonitrile, butyronitrile, benzonitrile (the above being organic compounds containing a nitrile group). Here, the organic compound containing a hydroxyl group is not particularly limited; however, it is preferably a polyhydric alcohol or a monohydric alcohol having a carbon number of 4 or more, because then the film quality will be good. Here, besides the examples raised above, the aforesaid organic compound may be an organic compound containing two or more bonds or functional groups among an ether bond, an ester bond, a carbonate bond, a hydroxyl group, a nitro group, a sulfone group, and a nitrile group in any combination in a molecule.

Also, in the method of producing an electrically conductive polymer of the present invention, the halogenated hydrocarbon contained as a solvent in the electrolyte solution is not particularly limited as long as it is one in which at least one or more hydrogen in the hydrocarbon is substituted with a halogen atom and can exist stably in a liquid form under an electrolytic polymerization condition. As the aforesaid halogenated hydrocarbon, dichloromethane and dichloroethane can be raised as examples. Though it is possible to use one kind of the aforesaid halogenated hydrocarbon alone as a solvent in the aforesaid electrolyte solution, it is also possible to use two or more kinds in combination. Also, the aforesaid halogenated hydrocarbon may be used as a mixture with the above-described organic compound, and the mixed solvent mixed with the organic solvent may be used as a solvent in the aforesaid electrolyte solution.

In the electrolyte solution used in the aforesaid electrolytic polymerization method, the monomer of an electrically conductive polymer contained in the electrolyte solution used in the electrolytic polymerization method is not particularly limited as long as it is a compound that is polymerized by oxidation through electrolytic polymerization to exhibit electric conductivity. For example, five-membered heterocyclic compounds such as pyrrole, thiophene, and isothianaphthene, and the derivatives thereof with alkyl group or oxyalkyl group may be raised. Among these, five-membered heterocyclic compounds such as pyrrole and thiophene, and the derivatives thereof are preferable. Particularly, it is preferably an electrically conductive polymer containing pyrrole and/or a pyrrole derivative because then the production will be easy and it will be stable as an electrically conductive polymer. Also, two or more kinds of the aforesaid monomers may be used in combination.

It is preferable that the electrolyte contained in the electrolyte solution used in the aforesaid electrolytic polymerization method contains perfluoroalkylsulfonylimide ion represented by the following chemical formula (1), because then it will be easy to obtain an electrically conductive polymer such that the filmy object, upon immersion in a good solvent, expands to come to have a film surface area larger by 30% or more than the film surface area before the immersion.

$$(C_nF_{(2n+1)}SO_2)(C_mF_{(2m+1)}SO_2)\,N^- \qquad\qquad (1)$$

(here, n and m are arbitrary integers.)

In a filmy object containing an electrically conductive polymer obtained by the electrolytic polymerization method obtained by the electrolytic polymerization method using an electrolyte solution containing the aforesaid perfluoroalkylsulfonylimide ion, the aforesaid anion is present within a bulk. The aforesaid anion has a larger molecule size as compared with conventional dopants such as perchlorate ion and trifluoromethanesulfonate ion. For this reason, the aforesaid electrically conductive polymer releases the aforesaid perfluoroalkylsulfonylimide ion by dedoping, and can easily incorporate a larger functional polymer. Also, by the electrolytic polymerization method that uses an electrolyte solution containing the aforesaid perfluoroalkylsulfonylimide ion, one can easily obtain a filmy object having a plurality of holes that are formed in a porous form on the film surface and being provided with holes such that the shorter diameter of the aforesaid holes at the opening is 0.5 $\mu$m or more at the time of being dry.

The aforesaid perfluoroalkylsulfonylimide ion has a sulfonyl group bonded to a nitrogen atom serving as an anion center, and further has two perfluoroalkyl groups which are substituents. This perfluoroalkylsulfonyl is represented by $C_nF_{(2n+1)}\,SO_2$, and the other perfluoroalkylsulfonyl group is represented by $C_mF_{(2m+1)}\,SO_2$. The aforesaid n and m are arbitrary integers respectively being 1 or more. The numbers n and m may be the same integer, or the numbers n and m may be different integers. For example, trifluoromethyl group, pentafluoroethyl group, heptafluoropropyl group, nonafluorobutyl group, undecafluoropentyl group, tridecafluorohexyl group, pentadecafluoroheptyl group, and heptadecafluorooctyl group may be raised. As the aforesaid perfluoroalkylsulfonylimide salt, for example, bistrifluoromethylsulfonylimide salt, bis(pentafluoroethylsulfonyl)imide salt, and bis(heptadecafluorooctylsulfonyl)imide salt can be used.

The perfluoroalkylsulfonylimide ion of the above chemical formula (1) can form a salt with a cation, and may be added as a perfluoroalkylsulfonylimide salt in the electrolyte solution in the electrolytic polymerization method. The cation that forms a salt with perfluoroalkylsulfonylimide may be constituted of one element such as $Li^+$, or may be constituted of plural elements. The aforesaid cation is not particularly limited as long as it can form a perfluoroalkylsulfonylimide ion as a monovalent positive ion and is a Lewis acid that can be dissociated in an electrolyte solution.

When the aforesaid cation is a metal element, an element selected, for example, from alkali metals such as lithium can be used. Also, when the aforesaid cation is a molecule, alkylammonium represented by tetrabutylammonium and tetraethylammonium, pyridinium, imidazolium, and the like can be used, for example.

The perfluorosulfonylimide ion contained in the electrolyte solution of the electrolytic polymerization method in the production method of the present invention can form various salts by a combination of perfluoroalkylsulfonylimide ion serving as a base component and a cation serving as an acid component, as described above. Since perfluorosulfonylimide salt can be easily dissociated in a solution and is easily available, bis(perfluoroalkylsulfonyl)imide lithium such as bis(trifluoromethyl)sulfonylimide lithium and bis(pentafluoroethylsulfonyl)imide lithium, and tetrabutylammonium salt, pyridinium salt, or imidazolidium salt of bis(perfluoroalkylsulfonyl)imide such as bis(trifluoromethyl)sulfonylimide and bis (pentafluoroethylsulfonyl)imide are preferable.

The content of the aforesaid perfluoroalkylsulfonylimide ion in the electrolyte solution in the electrolytic polymerization method is not particularly limited; however, the aforesaid perfluoroalkylsulfonylimide ion is preferably contained in an amount of 1 to 40 wt%, more preferably 2.8 to 20 wt%, as perfluoroalkylsulfonylimide salt so as to ensure a sufficient ion conductivity of the electrolyte solution.

In the method of producing an electrically conductive polymer of the present invention, the electrolyte solution used in the electrolytic polymerization method can further contain other known additives such as polyethylene glycol and polyacrylamide.

Here, in the method of producing an electrically conductive polymer of the present invention, the working electrode is not particularly limited as long as it can be used for electrolytic polymerization, so that an ITO glass electrode, a carbon electrode, a metal electrode, and the like can be used. The aforesaid metal electrode is not particularly limited as long as it is an electrode mainly made of a metal; however, an electrode of a single metal element or an electrode of an alloy made of metal elements selected from the group consisting of Pt, Ti, Ni, Au, Ta, Mo, Cr, C, and W can be used. It is especially preferable that the metal kind contained in the metal electrode is Ni or Ti because the electrode is easily available. Here, as the aforesaid alloy, for example, trade names "INCOLOY alloy **825", "INCONEL alloy 600", and "INCONEL alloy X-750" (the above** being manufactured by Daido Special Metal Co., Ltd.) can be used. Also, in order to increase the swelling contraction in a solvent, a Pt electrode is preferable and, when large swelling in a good solvent is desired, it is preferable to use an ITO glass electrode or an ITO electrode using a plastic substrate.

The filmy object of the present invention contains, as a film-forming component, an electrically conductive polymer obtained by the electrolytic polymerization method. The aforesaid filmy object can perform doping and dedoping of functional molecule ions by control of applied voltage because of containing an electrically conductive polymer obtained by the electrolytic polymerization method as a film-forming component. The aforesaid filmy object may contain components other than the electrically conductive polymer, such as metal mesh, metal coil, porous polymer, porous ceramics, porous glass, and polymer as long as the filmy object does not lose functions as a functional film. In the aforesaid filmy object, it is preferable that the base resin is an electrically conductive polymer, and it is further preferable that all the resin components of the aforesaid filmy object are electrically conductive polymers obtained by the electrolytic polymerization method, because then the doping and dedoping of functional polymer ions by application of voltage will be easy. In particular, it is preferable that, in the aforesaid filmy object, all the resin components are electrically conductive polymers obtained by the electrolytic polymerization method and, in the electrolytic polymerization method, the monomer is pyrrole and/or a pyrrole derivative, and are electrically conductive polymers obtained by the electrolytic polymerization and containing perfluoroalkylsulfonylimide ion represented by the formula (1):

$$(C_nF_{(2n+1)}SO_2)(C_mF_{(2m+1)}SO_2) N^-  \qquad (1)$$

(here, n and m are arbitrary integers.) in the electrolyte solution, because then the filmy object can absorb and desorb larger functional molecule ions.

The filmy object of the present invention is obtained by the electrolytic polymerization method. In order to use it for an intended purpose, the filmy object can be peeled off from the working electrode that was used for the electrolytic polymerization, or may be used by being combined with the working electrode. In the case of peeling off the aforesaid filmy object from the working electrode, the aforesaid filmy object can be obtained, for example, by allowing the electrically conductive polymer film formed on the working electrode by the electrolytic polymerization to swell with a good solvent such as acetone, and peeling off the electrically conductive polymer film with use of forceps or the like.

If it is required for use of the filmy object of the present invention as a functional film that the aforesaid filmy object is made to contain a substance (functional molecules) for exhibiting a function as a functional film of a pharmaceutical agent, an agricultural chemical, an insecticide, an organism avoiding agent, or the like before using the functional film, the aforesaid filmy object can contain the aforesaid substance in an ion state by application of voltage to the aforesaid filmy object in a good solvent into which the aforesaid substance has been dissolved. Also, the filmy object can incorporate functional molecules by immersion of the filmy object of the present invention into a solution containing the functional molecules or by exposure of the filmy object of the present invention to a gas containing the functional molecules.

EXAMPLES

Hereafter, Examples and Comparative Examples of the present invention will be shown; however, the present invention is not limited to the following.

(Example 1)

Polypyrrole which is a monomer of electrically conductive polymer and a salt described in Table 1 were dissolved into a solvent described in Table 1 by a known agitation method, so as to prepare an electrolyte solution having a monomer concentration of 0.25 mol/l and with the dopant salt of Table 1 having a concentration of 0.2 mol%. With this electrolyte solution, electrolytic polymerization was carried out by the constant-current method with the polymerization current density being a value described in Table 1 using a commercially available electrode having a metal kind described in Table 1 as a working electrode and using a commercially available Pt electrode as an opposing electrode. By this electrolytic polymerization, an electrically conductive polymer film having an electric conductivity and a film thickness described in Table 1 was obtained on the working electrode. The aforementioned electrically conductive polymer film having a working electrode form was immersed into acetone, and the electrically conductive polymer film was peeled off from the working electrode with use of commercially available forceps to obtain a filmy object of Example 1.

(Examples 2 to 8)

Filmy objects of Examples 2 to 4 were obtained in the same manner as in Example 1 except that the electrolytic polymerization was carried out with the salt, the solvent, the electrode, and the current density described in Table 1. Here, TBA represents tetrabutylammonium.

(Comparative Example)

A filmy object of Comparative Examples 1 was obtained in the same manner as in Example 1 except that the electrolytic polymerization was carried out with the salt, the solvent, the electrode, and the current density described in Table 1.

**[Table 1]**

| | | Example 1 | Example 2 | Example 3 | Example 4 | Comparative Example 1 |
|---|---|---|---|---|---|---|
| Polymerization condition | Salt | $(CF_3SO_2)_2$ NLi | $(CF_3SO_2)_2$ NLi | $(CF_3SO_2)_2$ NTBA | $(CF_3SO_2)_2$ NTBA | $CF_3SO_2TBA$ |
| | Solvent | Methyl benzoate | Methyl benzoate | Methyl benzoate | Methyl benzoate | Methyl benzoate |
| | Electrode | Ti | Ni | Ti | Pt | Ti |
| | Current density $(mA/cm^2)$ | 0.2 | 0.2 | 0.2 | 0.2 | 0.2 |
| | Polymerization time (hr) | 4 | 4 | 4 | 4 | 4 |
| Characteristics | Electric conductivity (S/cm) | 75.4 | 34.8 | 129.0 | 114.4 | 107.7 |
| | Film thickness ($\mu$m) | 19.0 | 26 | 32 | 17 | 20 |
| | Swelling ratio (%) | Acetone | 97 | 97 | 109 | 132 | 8 |
| | | Propylene carbonate | 85 | 85 | 92 | 120 | 3 |

(Evaluation)

Each of the filmy objects of electrically conductive polymer obtained in Examples 1 to 4 and Comparative Example 1 was cut out to have a length of about 30 mm, a width of about 30 mm, and a thickness of about 0.03 mm to prepare a test piece, and the swelling ratio was measured.

**[Swelling ratio]**

Each of the test pieces of the filmy objects obtained in Examples 1 to 4 and Comparative Example 1 was prepared for the number of solvents for immersion and, with respect to each test piece, the length and the width of the actual test piece were measured. Subsequently, into acetone and polycarbonate, each of the test pieces of the filmy objects obtained in Examples 1 to 4 and Comparative Example 1 was immersed each for six minutes so that each test piece might be immersed into one kind of solvent. With respect to each immersed test piece, the length and the width of the test piece after immersion into the solvent was measured. The swelling ratio was calculated with use of the following formula. Here, the area of the film surface of the test piece is a product of the length and the width in each test piece.

$$\text{Swelling ratio (\%)} = [(\text{film area of test piece after immersion}) - (\text{film area of test piece before immersion})] / (\text{film area of test piece before immersion}) \times 100$$

(Results)

The filmy object containing the electrically conductive polymer of Examples 1 to 4 is an electrically conductive polymer film obtained by the electrolytic polymerization method, and swelled by 30% or more in the solvent. Particularly, the filmy object of Example 3 and Example 4 swelled by 100% or more, and exhibited a state as a gel polymer that has swollen to an extremely large extent. In contrast, the filmy object of Comparative Example 1 is a conventional filmy object containing an electrically conductive polymer obtained by the electrolytic polymerization method, and had a swelling ratio of an extremely low value as compared with 30%. The filmy object of the present invention swells largely by a solvent, so that the molecular movement in the filmy object having a gel form is easy as compared with a film having a solid form. Therefore, adsorption and release of functional molecule ions is easy as a functional film. When the swelling ratio of the filmy object of the present invention is a value further higher than 30% as in the filmy object of Examples 1 to 4, adsorption and release of functional molecule ions is further easier.

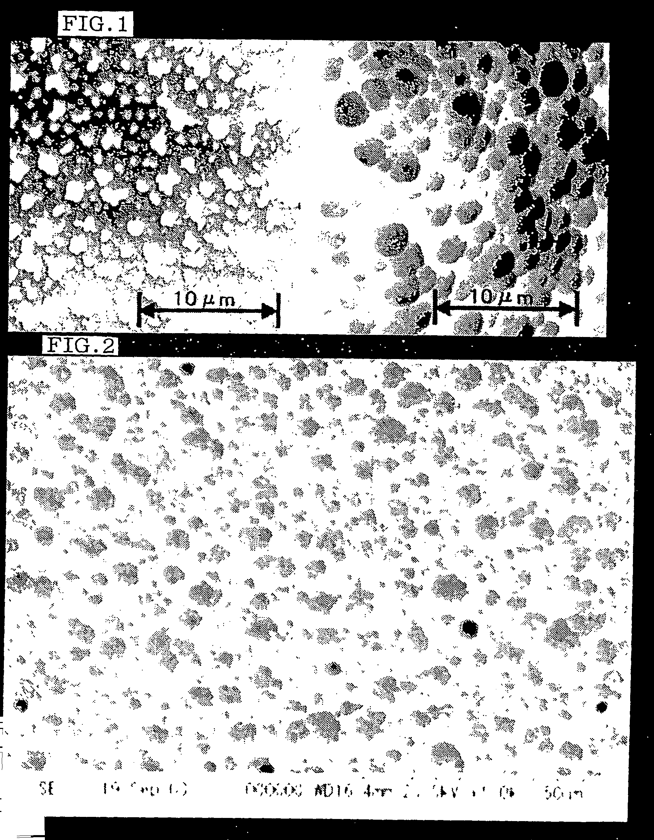

The filmy object of Example 1 is a filmy object of electrically conductive polymer obtained by the electrolytic polymerization method, and a view of an electron microscope photograph of the film surface thereof is shown in Fig. 1. The right side of Fig. 1 shows an electron microscope photograph of the surface of the film surface on the electrolyte solution side, and the left side shows an electron microscope photograph of the surface of the film surface on the electrode side. As shown in Fig. 1, the filmy object of Example 1 of the present invention has a porous structure having a sponge form and has a large specific surface area, so that even large functional molecules or ions can be easily diffused into the inside of the film. In contrast, the filmy object of Comparative Example 1 is provided with a flat film surface as shown in Fig. 2. Moreover, since the filmy object of Comparative Example 1 is provided with a flat film surface both on the front side and on the back side, it is not easy even for large functional molecules or ions to be diffused into the inside of the film.

The electron microscope photographs of Figs. 1 and 2 are photographs that have been captured with a magnification of 1000 times with use of a known image-capturing method that captures images under a high vacuum by allowing gold to adhere to the sample by a known sputtering method with use of a scanning electron microscope (trade name of "S-3000N", manufactured by Hitachi High Technology Co., Ltd.). Fig. 1 is a view obtained by cutting a part near the center out into a square form without performing special image-processing treatments and joining a photograph of the film surface on the electrolyte solution side and a photograph of the film surface on the electrode side.

INDUSTRIAL APPLICABILITY

The filmy object of the present invention can be used as a functional film and can be used in various modes in accordance with the intended object. For example, the filmy object of the present invention can be suitably used as a supporting film having a slow-releasing property that releases drugs represented by pharmaceutical agents, agricultural chemicals, or drugs for home use (insecticide or the like of ticks, cockroaches, and mosquitoes), an odor releasing electrode, a drug releasing part of a catheter that locally transmits drugs, and a drug releasing part of an automatic drug adding system.

Also, the filmy object of the present invention can adsorb and release functional molecule ions, so that the filmy object can be used suitably as a functional separation film for collection of trace substances having a highly added value, for collection and removal of harmful substances, or for a precision separation system that can be controlled to adsorb and release by electrical control.

The filmy object of the present invention can adsorb and release functional molecule ions, so that the filmy object can be used suitably also as a base material for an optical electrode of a photocell, a touch panel, an opposing electrode of a dye-sensitizing type solar cell, a reaction field of trace organic synthesis, a field effect transistor, a supporting film of a catalyst, an electrode catalyst represented by a fuel cell, and a filmy controlling part that electrically controls the composition of a solution.

The filmy object of the present invention can adsorb and release functional molecule ions, so that the filmy object can be used suitably also as a water-purging film, an electrode of a flexible display represented by an electric paper, a substance transporting film, a chemical motor, and a molecular sieve.

The filmy object of the present invention can generate swelling such that, when the filmy object is immersed in a good solvent, the film surface area of the filmy object increases by 30% or more as compared with the area before the immersion, so that the filmy object can be used suitably for various purposes by utilizing the swelling characteristics. For example, the filmy object of the present invention can be used suitably also as an artificial skin, a wall paper that changes the sense of touch, a valve that utilizes the swelling contraction to a solvent, an intelligent gate, and a shock absorber. The filmy object of the present invention can be used suitably as a polymer electrolyte by immersion into an electrolyte solution after dedoping by utilizing the swelling characteristics thereof.

The filmy object of the present invention can generate swelling such that, when the filmy object is immersed in a good solvent, the film surface area of the filmy object increases by 30% or more as compared with the area before the immersion, and moreover, the aforesaid filmy object is a filmy object having a plurality of holes that are formed in a porous form on the film surface, and the shorter diameter of the holes at the opening part is 0.5 $\mu$m or more at the time of being dry. Since the filmy object has holes also, the surface area at the film surface will be large, so that the filmy object can be used suitably as a sensor represented by an electric nose, an odor sensor, a gas sensor, a gustatory sensor, a pH sensor, a humidity sensor, and a tactual sensor. Also, since the aforesaid filmy object has holes also, the surface area at the film surface will be large, so that the filmy object can be used suitably also as an electrode of a large-capacity secondary battery and a capacitor.

**Claims**

1. A filmy object containing an electrically conductive polymer, **characterized in that**

   (1) said electrically conductive polymer is one obtained by the electrolytic polymerization method and
   (2) upon immersion in a good solvent, said filmy object expands to come to have a film surface area larger by 30% or more than the film surface area before the immersion.

2. The filmy object of Claim 1, wherein, in said electrically conductive polymer, the monomer is pyrrole and/or a pyrrole derivative.

3. The filmy object of Claim 1, wherein said good solvent is a polar organic solvent.

4. The filmy object of Claim 1, wherein said good solvent is acetone or propylene carbonate.

5. The filmy object of Claim 1, wherein, after the immersion, the filmy object expands to come to have a film surface area larger by 60% or more than the film surface area before the immersion.

6. The filmy object of Claim 1, wherein, after the immersion, the filmy object expands to come to have a film surface area larger by 80% or more than the film surface area before the immersion.

7. The filmy object of Claim 1, **characterized in that**, in said electrolytic polymerization method,
   the monomer is pyrrole and/or a pyrrole derivative, and
   the electrolyte solution contains perfluoroalkylsulfonylimide ion represented by the formula (1):

$$(C_nF_{(2n+1)}SO_2)(C_mF_{(2m+1)}SO_2)N^- \qquad (1)$$

   (here, n and m are arbitrary integers.).

FIG.1

10 μm        10 μm

FIG.2

## INTERNATIONAL SEARCH REPORT

| | International application No. |
|---|---|
| | PCT/JP2005/001701 |

| A. CLASSIFICATION OF SUBJECT MATTER |
|---|
| Int.Cl⁷ C08G61/12, H01B1/12, H01M4/86//H01M10/40, 14/00 |

According to International Patent Classification (IPC) or to both national classification and IPC

| B. FIELDS SEARCHED |
|---|
| Minimum documentation searched (classification system followed by classification symbols) |
| Int.Cl⁷ C08G61/12, H01B1/12, H01M4/86//H01M10/40, 14/00 |

Documentation searched other than minimum documentation to the extent that such documents are included in the fields searched

Jitsuyo Shinan Koho    1922-1996   Jitsuyo Shinan Toroku Koho   1996-2005
Kokai Jitsuyo Shinan Koho  1971-2005   Toroku Jitsuyo Shinan Koho   1994-2005

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X | JP 10-306144 A (Toshio KUNUGI), | 1-6 |
| A | 17 November, 1998 (17.11.98), Claims (Family: none) | 7 |
| A | JP 8-53566 A (NEC Corp.), 27 February, 1996 (27.02.96), Claims (Family: none) | 1-7 |
| A | JP 64-75534 A (NISSHA Printing Co., Ltd.), 22 March, 1989 (22.03.89), Claims (Family: none) | 1-7 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 May, 2005 (02.05.05) | 31 May, 2005 (31.05.05) |

| Name and mailing address of the ISA/ | Authorized officer |
|---|---|
| Japanese Patent Office | |
| Facsimile No. | Telephone No. |

Form PCT/ISA/210 (second sheet) (January 2004)